# EUROPÄISCHE PATENTANMELDUNG

(11) **EP 1 473 450 A1**
(43) Veröffentlichungstag der Anmeldung: **03.11.2004**
(21) Anmeldenummer: 04007451.0
(22) Anmeldetag: 26.03.2004
(51) Int. Cl.: F02B 41/10, F16D 33/20

(54) **Kraftfahrzeugantriebsstrang mit einer Abgasnutzturbine und einer hydrodynamischer Kupplung**

(30) Priorität: 30.04.2003 DE 10319748
(71) Anmelder: Voith Turbo GmbH & Co. KG, 89522 Heidenheim (DE)
(72) Erfinder: Kley, Markus, 73479 Ellwagen (DE); Höller, Heinz, W., 74564 Crailsheim (DE)
(74) Vertreter: Weitzel, Wolfgang, Dr.-Ing.

(57) **Zusammenfassung**

Die vorliegende Erfindung betrifft einen Kraftfahrzeugantriebsstrang, umfassend einen Verbrennungsmotor, eine Kurbelwelle, die vom Verbrennungsmotor angetrieben wird und eine Abgasnutzturbine, die im Abgasstrom des Verbrennungsmotors zum Umwandeln von Abgasenergie in Drehenergie angeordnet ist.

Die Abgasnutzturbine steht in Triebverbindung mit einer das Fahrzeug zumindest mittelbar antreibenden Welle, insbesondere der Kurbelwelle. In die Triebverbindung ist eine hydrodynamische Kupplung geschaltet.

Die hydrodynamische Kupplung weist ein beschaufeltes Primärrad auf, das in Triebverbindung mit der Abgasnutzturbine steht, und ferner ein beschaufeltes Sekundärrad, das in Triebverbindung mit der antreibenden Welle, insbesondere der Kurbelwelle steht, wobei Primärrad und Sekundärrad einen torusförmigen Arbeitsraum miteinander ausbilden, in dem ein Arbeitsmedium einen drehmomentübertragenden Strömungskreislauf zwischen Primärrad und Sekundärrad ausbildet.

Der erfindungsgemäße Kraftfahrzeugantriebsstrang ist gekennzeichnet durch die folgenden Merkmale:
Die Schaufeln des Primärrads und des Sekundärrads sind gegenüber der Längsachse der hydrodynamischen Kupplung geneigt und zueinander spießend angeordnet, wobei die Neigung der Schaufeln des Primärrads in der Drehrichtung und die Neigung der Schaufeln des Sekundärrads entgegen der Drehrichtung ausgeführt ist.

## Beschreibung

Die Erfindung betrifft einen Antriebsstrang eines Kraftfahrzeugs mit Abgasenergienutzung.

Mittels einer Abgasnutzturbine wird Abgasenergie in Drehenergie umgesetzt und mittels dieser der Antrieb der Kurbelwelle des Fahrzeugs, welcher wie bekannt durch einen Verbrennungsmotor erfolgt, zusätzlich unterstützt. Durch die Ausnutzung der Abgasenergie zum Antrieb des Fahrzeugs wird der Wirkungsgrad des Antriebsstranges vergrößert. Der beschriebene gattungsgemäße Antriebsstrang ist dem Fachmann bekannt und wird auch als Turbocompound bezeichnet.

Bekannt ist dem Fachmann auch, dass in die Triebverbindung zwischen Abgasnutzturbine und Kurbelwelle eine hydrodynamische Kupplung, auch Turbokupplung genannt, geschaltet werden kann, um die Antriebsenergie der Abgasnutzturbine verschleiß- und stoßfrei auf die Kurbelwelle zu übertragen und die Drehschwingungssysteme von Verbrennungsmotor und Abgasnutzturbine voneinander zu entkoppeln.

Sofern genügend Abgasenergie in einem bestimmten Betriebszustand des Verbrennungsmotors anfällt, wird die hydrodynamische Kupplung in der Regel mit einer konstanten Füllung betrieben. Mittels einer geeigneten Triebverbindung überträgt die Abgasnutzturbine Rotationsenergie beziehungsweise Drehmoment auf das Primärrad der hydrodynamischen Kupplung. Im Primärrad der hydrodynamischen Kupplung wird ein Arbeitsmedium, mit welchem der Arbeitsraum der hydrodynamischen Kupplung befüllt ist, radial nach außen beschleunigt und strömt im gegenüberliegenden Sekundärrad wiederum radial nach innen. Durch diesen Strömungskreislauf im Arbeitsraum der hydrodynamischen Kupplung wird mittels des Arbeitsmediums Drehmoment vom Primärrad auf das Sekundärrad übertragen. Dieses Drehmoment wird mittels einer geeigneten Triebverbindung vom Sekundärrad weiter auf die Kurbelwelle des Fahrzeugs übertragen.

Es können jedoch Betriebszustände auftreten, bei denen das Sekundärrad der hydrodynamischen Kupplung aufgrund der Drehzahl der Kurbelwelle, die durch die Motordrehzahl bestimmt wird, durch die Kurbelwelle mit einer größeren Drehzahl angetrieben wird als das Primärrad durch die Abgasnutzturbine. In diesem Fall wird durch den Strömungskreislauf im Arbeitsraum der hydrodynamischen Kupplung Drehmoment vom Sekundärrad auf das Primärrad übertragen. Dies hat zur Folge, dass die Kurbelwelle sozusagen abgebremst wird, was unerwünscht ist.

Um eine solche "negative" Drehmomentübertragung zu vermeiden, wird in der Regel die Triebverbindung zwischen Abgasnutzturbine und Kurbelwelle, in welche die hydrodynamische Kupplung geschaltet ist, mit einem mechanischen Freilauf versehen, welcher eine rückwärtige Drehmomentübertragung, das heißt die Übertragung von Drehmoment von der Kurbelwelle auf die Abgasnutzturbine, vermeidet. Dies erfordert jedoch zusätzliche Bauteile und zusätzlichen Bauraum im Motorraum des Kraftfahrzeugs, was nachteilig ist.

Eine weitere Möglichkeit eine solche negative Drehmomentübertragung zu vermeiden ist darin zu sehen, dass der Verlauf der Drehmomentübertragung ständig überwacht wird und die hydrodynamische Kupplung in einem solchen Fall der negativen Drehmomentübertragung rasch vollständig entleert wird. Auch diese Möglichkeit erfordert zusätzlichen Bau- und Steuerungsaufwand.

Der Erfindung liegt die Aufgabe zugrunde, einen Kraftfahrzeugantriebsstrang mit einer Abgasnutzturbine und einer hydrodynamischen Kupplung darzustellen, der gegenüber dem Stand der Technik verbessert ist und insbesondere die eingangs genannten Nachteile vermeidet.

Diese Aufgabe wird durch einen Kraftfahrzeugantriebsstrang gemäß des Anspruchs 1 gelöst. Die Unteransprüche beschreiben besonders vorteilhafte Weiterbildungen der Erfindung.

Der erfindungsgemäße Kraftfahrzeugantriebsstrang, welchen man auch als Turbocompound bezeichnen könnte, zeichnet sich dadurch aus, dass die Beschaufelung der hydrodynamischen Kupplung gegenüber bekannten hydrodynamischen Kupplungen, die zur Übertragung von Drehmoment einer Abgasnutzturbine eingesetzt werden, modifiziert ist. So weist die der Abgasnutzturbine in Triebverbindung nachgeschaltete und der Kurbelwelle vorgeschaltete hydrodynamische Kupplung eine Beschaufelung von Primärrad und Sekundärrad auf, die gegenüber der Längsachse der hydrodynamischen Kupplung, das heißt gegenüber beispielsweise der Rotorachse der hydrodynamischen Kupplung, geneigt ist. Dabei sind die Schaufeln des Primärrads und des Sekundärrads gegenüberstehend derart angeordnet, dass sie miteinander fluchten. Diese Anordnung wird auch spießende Anordnung genannt.

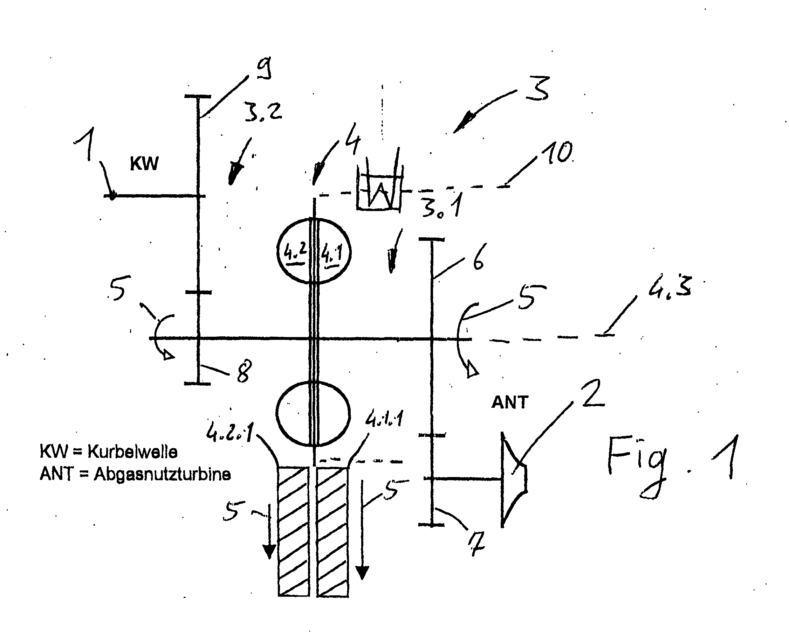

Die Neigung der Schaufeln beider Räder ist wie folgt ausgeführt: Die Schaufeln des Primärrads, das heißt des Schaufelrads der hydrodynamischen Kupplung, welches auf der Seite der Abgasnutzturbine angeordnet ist, sind ausgehend vom Schaufelboden in Drehrichtung des Primärrads geneigt. Die Neigung der Schaufeln des Sekundärrads, das heißt des Schaufelrads der hydrodynamischen Kupplung, welches auf der Seite der Kurbelwelle angeordnet ist, ist ausgehend vom Schaufelboden entgegen der Drehrichtung des Sekundärrads ausgeführt. Die Neigung und die Drehrichtung sind im Einzelnen nochmals schematisch in der Figur 1 dargestellt.

Auch wenn durch die Abgasnutzturbine in der Regel die Kurbelwelle angetrieben wird, ist die Erfindung nicht darauf beschränkt, sondern es kann eine beliebige Welle im Antriebstrang des Fahrzeugs, die zumindest mittelbar dem Antrieb des Fahrzeugs dient, mit der Drehenergie der Abgasnutzturbine beaufschlagt werden.

Die erfindungsgemäß beschaufelte Kupplung ist in jedem Fall in die Triebverbindung zwischen Abgasnutzturbine und angetriebener Welle eingebracht.

Als Arbeitsmedium der hydrodynamischen Kupplung wird vorteilhaft Motoröl beziehungsweise das Kühlmittel des Fahrzeugkühlkreislaufs verwendet. Das letztere ist insbesondere Wasser oder ein Wasser-Glykol-Gemisch. Die Füllmenge an Arbeitsmedium in der hydrodynamischen Kupplung beziehungsweise im Arbeitsraum der hydrodynamischen Kupplung ist vorteilhaft konstant. Gleichzeitig kann jedoch ein Austausch von Arbeitsmedium mit einem externen Kühlkreislauf, welcher an die hydrodynamische Kupplung angeschlossen ist, stattfinden. In diesem Kühlreislauf wird in einem solchen Fall das Arbeitsmedium, welches im Arbeitsraum der hydrodynamischen Kupplung erwärmt wird, abgekühlt.

Der externe Kühlkreislauf kann insbesondere der Fahrzeugkühlkreislauf sein. Das bedeutet, dass zum Kühlen des Arbeitsmediums der Fahrzeugkühler verwendet wird.

In einer besonders vorteilhaften Ausführungsform ist die gesamte Triebverbindung zwischen Kurbelwelle und Abgasnutzturbine, in welche die hydrodynamische Kupplung geschaltet ist, frei von einem mechanischen Freilauf. Dadurch können Bauteile und Bauraum eingespart werden. Ferner wird die Funktionssicherheit vergrößert.

Durch die spießende Anordnung der Primärradschaufeln gegenüber den Sekundärradschaufeln weist die hydrodynamische Kupplung eine Freilauffunktion auf. Das heißt, auch wenn das Sekundärrad mit einer größeren Antriebsdrehzahl als das Primärrad angetrieben wird, wird kein oder im wesentlichen kein Drehmoment vom Sekundärrad auf das Primärrad übertragen. Eine Abbremsung der Kurbelwelle durch die Abgasnutzturbine findet somit nicht beziehungsweise nahezu nicht statt.

Um in besonderen Betriebssituationen eine negative Drehmomentübertragung stets vollständig auszuschließen, kann die hydrodynamische Kupplung zusätzlich entleerbar ausgeführt sein. Dabei ist insbesondere eine Steuervorrichtung vorgesehen und an der hydrodynamischen Kupplung angeschlossen, die den Befüllungsgrad der hydrodynamischen Kupplung steuert.

Aufgrund des beengten Bauraums im Motorraum eines Fahrzeugs und der heutzutage geforderten Leichtbauweise ist die hydrodynamische Kupplung vorteilhaft aus einem Werkstoff mit geringer spezifischer Masse und zudem mit kleinen Abmaßen ausgeführt. So weist sie vorteilhaft einen Leistungsbereich zwischen 40 und 100 kW auf, das bedeutet, sie kann zwischen 40 und 100 kW an Antriebsenergie vom Primärrad auf das Sekundärrad übertragen.

Als vorteilhafte bauliche Abmaße sind Außendurchmesser der Beschaufelung, das heißt Außendurchmesser der Profile der Schaufeln, anzusehen, welche im Bereich von 130 bis 190 Millimeter (mm) liegen. Besonders vorteilhaft sind Außendurchmesser der Beschaufelung von 136 oder 170 Millimeter.

Die hydrodynamische Kupplung kann besonders leicht und kostengünstig hergestellt werden, wenn Primärrad und Sekundärrad mit Blechschaufeln ausgebildet sind. Insbesondere die Ausbildung der gesamten hydrodynamischen Kupplung als thermisch verbundene, insbesondere geschweißte und/oder gelötete Blechkonstruktion ist hinsichtlich der Herstellungskosten und des Gewichts gegenüber einer Gussausführung vorteilhaft. Somit sind sowohl die Schaufelräder als auch die Gehäusehülle besonders vorteilhaft aus Blech ausgeführt.

Sofern die hydrodynamische Kupplung als entleerbare Kupplung ausgebildet ist, können Mittel zum Festsetzen des Rotors der Abgasnutzturbine vorgesehen sein, um bei entleerter Kupplung ein Überdrehen der Abgasnutzturbine zu verhindern.

Alternativ oder zusätzlich kann ein Bypass des Abgasstroms um die Abgasnutzturbine herum vorgesehen sein.

Selbstverständlich ist es auch möglich, den Bypass beziehungsweise ein Mittel zum Festsetzen des Rotors, beispielsweise eine Feststellbremse, für die Abgasnutzturbine vorzusehen, wenn die hydrodynamische Kupplung als schräg beschaufelte Kupplung ausgeführt wird, die im Betrieb nicht entleert wird. Hierdurch kann zum Beispiel gezielt ein Einfluss auf die Freilaufwirkung der hydrodynamischen Kupplung genommen werden.

Nachfolgend soll die Erfindung anhand der Figur näher erläutert werden.
- Figur 1: zeigt in einer schematischen Darstellung die Zwischenschaltung einer hydrodynamischen Kupplung zwischen eine Kurbelwelle und eine Abgasnutzturbine eines erfindungsgemäßen Antriebsstranges.

Die hydrodynamische Kupplung 4 weist ein Primärrad 4.1 und ein Sekundärrad 4.2 auf. Primärrad 4.1 und Sekundärrad 4.2 sind, wie es bei hydrodynamischen Kupplungen üblich ist, gegenüberstehend angeordnet und bilden einen Arbeitsraum aus.

Die hydrodynamische Kupplung 4 unterteilt die Triebverbindung 3 zwischen einer Kurbelwelle 1, welche von einem nicht dargestellten Verbrennungsmotor angetrieben wird, und einer Abgasnutzturbine 2, welche im nicht dargestellten Abgasstrom des Verbrennungsmotors angeordnet ist, in zwei Abschnitte 3.1 und 3.2. Das Primärrad 4.1 steht über eine Zahnradverbindung, Zahnrad 6 und Ritzel 7 in direkter Triebverbindung mit der Abgasnutzturbine 2. Das Sekundärrad 4.2 steht über eine Zahnradverbindung, Ritzel 8 und Zahnrad 9 in direkter Triebverbindung mit der Kurbelwelle 1. Somit wird zunächst Drehenergie beziehungsweise Drehmoment von der Abgasnutzturbine über die Triebverbindung 3.1 auf das Primärrad 4.1 der hydrodynamischen Kupplung 4 übertragen, von dort mittels des Strömungskreislaufs im Arbeitsraum der hydrodynamischen Kupplung 4 auf das Sekundärrad 4.2 und von dort mittels der Triebverbindung 3.2 auf die Kurbelwelle 1.

Die Drehrichtung der hydrodynamischen Kupplung, das heißt die Drehrichtung von Primärrad 4.1 und Sekundärrad 4.2, ist durch die Pfeile mit der Bezugsziffer 5 dargestellt. Wie man aus der schematischen Darstellung im unteren Bereich der Figur 1 sieht, sind die Schaufeln des Primärrads 4.1 ausgehend vom Schaufelradboden 4.1.1 gegenüber der Längsachse 4.3 der hydrodynamischen Kupplung 4 geneigt, und zwar in Richtung der Drehrichtung 5. Da die Schaufeln des Sekundärrads 4.2 im Längsschnitt durch die Kupplung fluchtend mit den Schaufeln des Primärrads 4.1 ausgerichtet sind, ist ihre Neigung ausgehend vom Schaufelradboden 4.2.1 entgegen der Drehrichtung 5 ausgeführt, da sich Primärrad 4.1 und Sekundärrad 4.2 in dieselbe Richtung drehen.

Wie schematisch durch die gestrichelte Linie dargestellt ist, ist die hydrodynamische Kupplung 4 an einen externen Kühlkreislauf 10 angeschlossen. Die hydrodynamische Kupplung 4 tauscht Arbeitsmedium, welches in der hydrodynamischen Kupplung 4 erwärmt wird, mit dem externen Kühlkreislauf 10 aus. Im externen Kühlkreislauf 10 wird die in der hydrodynamischen Kupplung zugeführte Wärme aus dem Arbeitsmedium wieder abgeführt. Dabei kann der externe Kühlkreislauf 10 der Fahrzeugkühlkreislauf sein, sofern als Arbeitsmedium der Kupplung 4 das Kühlwasser des Fahrzeugs verwendet wird. Zum Kühlen wird in diesem Fall der konventionelle Fahrzeugkühler verwendet.

## Patentansprüche

1. Kraftfahrzeugantriebsstrang, umfassend
1.1 einen Verbrennungsmotor;
1.2 eine Kurbelwelle (1), die vom Verbrennungsmotor angetrieben wird;
1.3 eine Abgasnutzturbine (2), die im Abgasstrom des Verbrennungsmotors zum Umwandeln von Abgasenergie in Drehenergie angeordnet ist;
1.4 die Abgasnutzturbine (2) steht in Triebverbindung (3) mit einer das Fahrzeug zumindest mittelbar antreibenden Welle, insbesondere der Kurbelwelle (1);
1.5 in die Triebverbindung (3) ist eine hydrodynamische Kupplung (4) geschaltet;
1.6 die hydrodynamische Kupplung (4) weist ein beschaufeltes Primärrad (4.1) auf, das in Triebverbindung (3.1) mit der Abgasnutzturbine (2) steht, und ferner ein beschaufeltes Sekundärrad (4.2), das in Triebverbindung (3.2) mit der antreibenden Welle, insbesondere der Kurbelwelle (1), steht, wobei Primärrad (4.1) und Sekundärrad (4.2) einen torusförmigen Arbeitsraum miteinander ausbilden, in dem ein Arbeitsmedium einen drehmomentübertragenden Strömungskreislauf zwischen Primärrad (4.1) und Sekundärrad (4.2) ausbildet;
**gekennzeichnet durch** die folgenden Merkmale:
1.7 die Schaufeln des Primärrads (4.1) und des Sekundärrads (4.2) sind gegenüber der Längsachse (4.3) der hydrodynamischen Kupplung (4) geneigt und zueinander spießend angeordnet, wobei die Neigung der Schaufeln des Primärrads (4.1) in der Drehrichtung (5) und die Neigung der Schaufeln des Sekundärrads (4.2) entgegen der Drehrichtung (5) der hydrodynamischen Kupplung (4) ausgeführt ist.

2. Kraftfahrzeugantriebsstrang gemäß Anspruch 1, **dadurch gekennzeichnet, dass** das Arbeitsmedium der hydrodynamischen Kupplung (4) Motoröl oder Kühlmittel des Fahrzeugkühlkreislaufs, insbesondere Wasser oder ein Wasser-Glykol-Gemisch, ist und die Füllmenge an Arbeitsmedium im Arbeitsraum der hydrodynamischen Kupplung konstant ist.

3. Kraftfahrzeugantriebsstrang gemäß einem der Ansprüche 1 oder 2, **dadurch gekennzeichnet, dass** die hydrodynamische Kupplung (4) an einem externen Kühlkreislauf (10), insbesondere beim Arbeitsmedium Wasser oder Wasser-Glykol-Gemisch an den Fahrzeugkühlkreislauf, zum Kühlen des Arbeitsmediums angeschlossen ist.

4. Kraftfahrzeugantriebsstrang gemäß einem der Ansprüche 1 bis 3, **dadurch gekennzeichnet, dass** die Triebverbindung (3) zwischen Kurbelwelle (1) und Abgasnutzturbine (2) frei von einem mechanischen Freilauf ist.

5. Kraftfahrzeugantriebsstrang gemäß einem der Ansprüche 1 bis 4, **dadurch gekennzeichnet, dass** die hydrodynamische Kupplung (4) zusätzlich entleerbar ist, wobei eine Steuervorrichtung zum Steuern des Befüllungsgrads der hydrodynamischen Kupplung (4) an der hydrodynamischen Kupplung (4) angeschlossen ist.

6. Kraftfahrzeugantriebsstrang gemäß einem der Ansprüche 1 bis 5, **dadurch gekennzeichnet, dass** die hydrodynamische Kupplung (4) einen Leistungsbereich zwischen 40 und 100 kW aufweist.

7. Kraftfahrzeugantriebsstrang gemäß einem der Ansprüche 1 bis 6, **dadurch gekennzeichnet, dass** die Beschaufelung von Primärrad (4.1) und Sekundärrad (4.2) einen Außendurchmesser von 130 bis 190 mm aufweist, insbesondere von 136 oder 170 mm.

8. Kraftfahrzeugantriebsstrang gemäß einem der Ansprüche 1 bis 7, **dadurch gekennzeichnet, dass** die Schaufeln von Primärrad (4.1) und Sekundärrad (4.2) als Blechschaufeln ausgeführt sind.

9. Kraftfahrzeugantriebsstrang gemäß Anspruch 8, **dadurch gekennzeichnet, dass** die gesamte hydrodynamische Kupplung (4) als thermisch verbundene, insbesondere geschweißte und/oder gelötete Blechkonstruktion, ausgeführt ist.
